Europäisches Patentamt

European Patent Office

Office européen des brevets

(11) Veröffentlichungsnummer: **0 340 612**
**A1**

(12) **EUROPÄISCHE PATENTANMELDUNG**

(21) Anmeldenummer: **89107519.4**

(22) Anmeldetag: **26.04.89**

(51) Int. Cl.4: **B60K 17/10**

(30) Priorität: **30.04.88 DE 3814678**

(43) Veröffentlichungstag der Anmeldung:
**08.11.89 Patentblatt 89/45**

(84) Benannte Vertragsstaaten:
**AT BE CH DE ES FR GB GR IT LI LU NL SE**

(71) Anmelder: **FIRMA GERHARD KLEMM MASCHINENFABRIK GMBH & CO.**
**Friedrich-Hagemann-Strasse 64**
**D-4800 Bielefeld 17(DE)**

(72) Erfinder: **Otte, Erhard**
**Kleiner Bruchweg 31**
**D-4980 Bünde 1(DE)**

(54) **Ausgleichsgetriebe bzw. Differentialgetriebe.**

(57) Einem hydrostatischen Motor 100 sind beiseitig mechanische Getriebe 200 und 300 zugeordnet wobei alle drei Teile in ihrer Ausbildung veränderbar sind. Alle drei Teile können in einem gemeinsamen Gehäuse 1 angeordnet sein. Es ist aber auch möglich den mechanischen Getrieben gesonderte Gehäuse zu geben.

Fig. 1

## Ausgleichsgetriebe bzw. Differentialgetriebe

Die Erfindung betrifft ein Ausgleichsgetriebe bzw. Differentialgetriebe, insbesondere für gelenkte angetriebene Fahrzeuge oder dgl.

Ausgleichsgetriebe bzw. Differentialgetriebe auch mit Anordnung eines hydrostatischen Motors sind an sich bekannt. So ist durch das deutsche Gebrauchsmuster 74 25 346 ein Ausgleichsgetriebe bekannt geworden, bei dem auf einer Seite und zwar auf der Eingangsseite ein mechanischer Drehantrieb vorgesehen ist, während auf der Ausgangsseite die Abtriebswelle mit dem Gehäuse verbunden ist, das eine innere Nockenscheibe für den Radialkolbenmotor aufnimmt.

Bei Verwendung eines Ausgleichsgetriebes dieser Art z.B. für gelenkte angetriebene Fahrzeuge oder dgl. besteht auf der Abtriebsseite keine Möglichkeit der differenzierten Übertragung der Abtriebsdrehzahl als Antrieb für das zweite Rad des angetriebenen Fahrzeuges, abgesehen davon, daß durch Mitdrehung des Gehäuses sich Schwierigkeiten in der Zuführung der Hydraulikmittel ergeben. Diese können nur auf einer der Seiten und zwar auf der Antriebsseite mittig zugeführt werden, wodurch sich eine relativ komplizierte Bauweise ergibt.

Die vorliegende Patentanmeldung ist aber nicht nur für den angegebenen Verwendungszweck einsetzbar, nicht nur für gelenkte angetriebene Fahrzeuge oder dgl., sondern kann auch für andere technische Einsätze Verwendung finden. In jedem Fall tritt aber bei gelenkten angetriebenen Fahrzeugen zwangsläufig bei Kurvenfahrten die Erscheinung auf, daß die im Kurveninneren liegenden, angetriebenen Räder sich langsamer drehen müssen, während die kurvenäußeren ebenfalls angetriebenen Räder sich entsprechend schneller drehen müssen und zwar bei gleichbleibender Fahrtgeschwindigkeit des Fahrzeuges. Ein solches Problem kann auch z.B. bei der Zu- und Abführung von schwerem Material in der Fertigung vorliegen. Bei diesen Problemstellungen insbesondere bei hydraulischen Fahrantrieben wird in diesen Fällen bisher jedem angetriebenen Rad ein Hydraulikmotor mit dem entsprechenden Untersetzungsgetriebe zugeordnet, was zu erhöhtem Aufwand und sinkendem Wirkungsgrad führt, ohne daß eine echte Differentialwirkung ohne weiteres erreicht werden kann.

Der vorliegenden Erfindung liegt somit die Aufgabe zu Grunde ein Ausgleichsgetriebe dieser Art zu schaffen, das eine Problemlösung für diese geschilderten Fälle bietet.

Diese Aufgabe wird durch die im Kennzeichen des Hauptanspruches genannten Merkmale gelöst.

Somit kann durch das erfindungsgemäße Ausgleichsgetriebe der Aufwand der bisher getrieben wurde erheblich verringert werden, wobei die Vorrichtung zu einer echten Differenzialwirkung führt.

Weitere Kennzeichen und Merkmale ergeben sich aus den Unteransprüchen.

In den Zeichnungen sind Ausführungsbeispiele der Erfindung dargestellt:

Fig. 1 zeigt die Vorrichtung im Schnitt,

Fig. 2 eine Ansicht der Fig. 1 in Pfeilrichtung A,

Fig. 3 eine Ansicht der Fig. 1 in Pfeilrichtung B,

Fig. 4 ein weiteres Ausführungsbeispiel mit einem Radialkolbenmotor als hydrostatischen Motor,

Fig. 5 einen Schnitt mit einem Zahnradmotor als hydrostatischen Motor.

Das Wesen der Erfindung besteht darin, daß einem hydrostatischen Motor 100 beidseitig mechanische Getriebe 200 und 300 zugeordnet sind, wobei alle drei Teile in ihrer Ausbildung veränderbar sind.

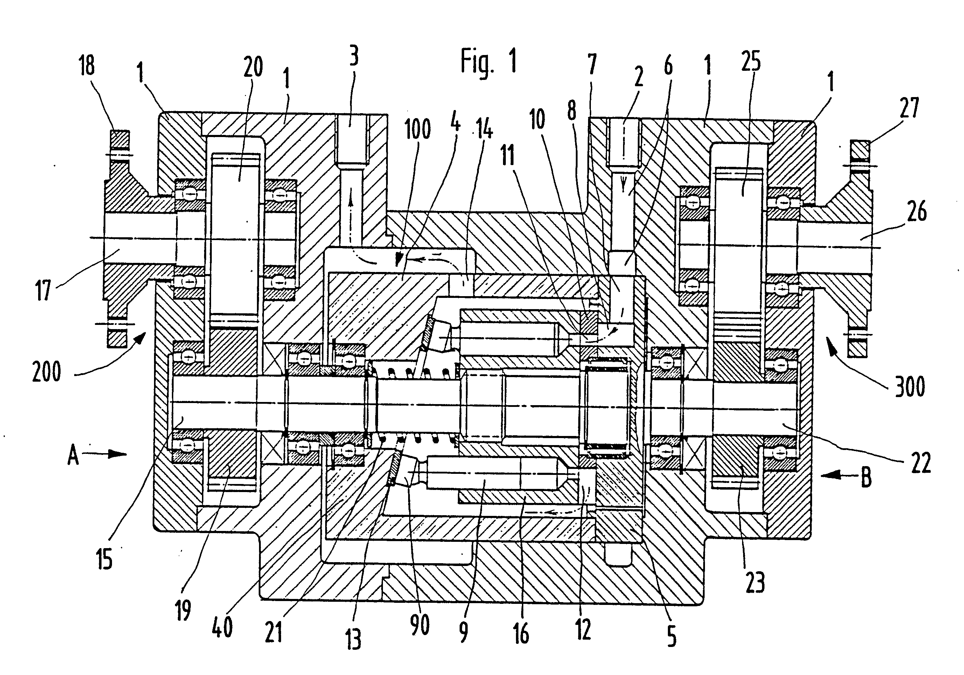

Bei der Ausbildung gemäß Fig. 1 sind alle drei Teile 100, 200, 300 in einem Getriebegehäuse 1 angeordnet, das für das hydraulische Mittel eine Einlauföffnung 2 und eine Auslauföffnung 3 aufweist.

Im Inneren des Getriebegehäuses 1 liegt das Motorgehäuse 4, das zum hydrostatischen Motor 100 gehört. Den vorderen Abschluß des Motorgehäuses 4 bildet eine Abschlußplatte 5, die über einen Ringkanal 6 im Getriebegehäuse 1 und einen Kanal 7 in der Abschlußplatte 5, sowie einen Seitenkanal 8 den Zulauf des Hydraulikmittels zu den Axialkolben 9 ermöglicht. Dazwischen liegt eine Ventilplatte 10 ebenfalls mit entsprechenden Durchgangsöffnungen und nach außen führenden Öffnungen 11 und 12. Durch die Durchgangsöffnung 11 wird Druck auf die Stirnfläche der jeweils in Position stehenden Kolben 9 gegeben, während bei Rückführung der Kolben 9 in das Innere des jeweils zugehörigen Zylinders das Hydraulikmittel aus der Öffnung 12 herausströmen kann.

Die Kolben 9 liegen auf einer Gleitscheibe 13, die schräg gestellt ist, auf einer entsprechenden Rampe 40 des Motorgehäuses 4.

Da das Motorgehäuse 4 vom Hydraulikmittel umströmt wird und eine Öffnung 14 aufweist zu seiner Periferie ist es möglich, daß das Hydraulikmittel durch den Auslauf 3 abströmen kann.

Das Motorgehäuse 4 mit der Abschlußplatte 5 ist somit drehbar im Getriebegehäuse 1 gelagert. Die Motorwelle 15 und der Zylinderblock 16 in dem die Axialkolben 9 liegen, sind sowohl gegenüber dem Getriebegehäuse 1 als auch gegenüber dem Motorgehäuse 4 und der Abschlußplatte 5 drehbar gelagert. Die Axialkolben 9 sind verschiebbar im Zylinderblock 16 angeordnet, wobei sie über ihre Gleitblöcke 90 ihren Bewegungsdruck empfangen.

Diesem hydrostatischen Motor 100 sind beidseitig, wie erwähnt, mechanische Getriebe 200 und 300 zugeordnet. Auf einer der Seiten liegt die Abtriebswelle 17 mit einem Anschlußflansch 18. Ein auf der Motorwelle 15 angeordnetes Zahnrad 19 kämmt in einem zugeordneten Zahnrad 20, das auf der Abtriebswelle 17 angeordnet ist. Beide Wellen und zwar die Abtriebswelle 17 und die Motorwelle 15 liegen in entsprechenden Kugellagern. Die Motorwelle 15 ist fest mit dem Zylinderblock 16 verbunden, eine Feder 21 drückt den Zylinderblock 16 und die Ventilplatte 10 gegen die Abschlußplatte 5, wobei diese Druckfeder sich einerseits auf dem Zylinderblock 16 und andererseits auf einem Federring der Motorwelle 15 abstützt. .

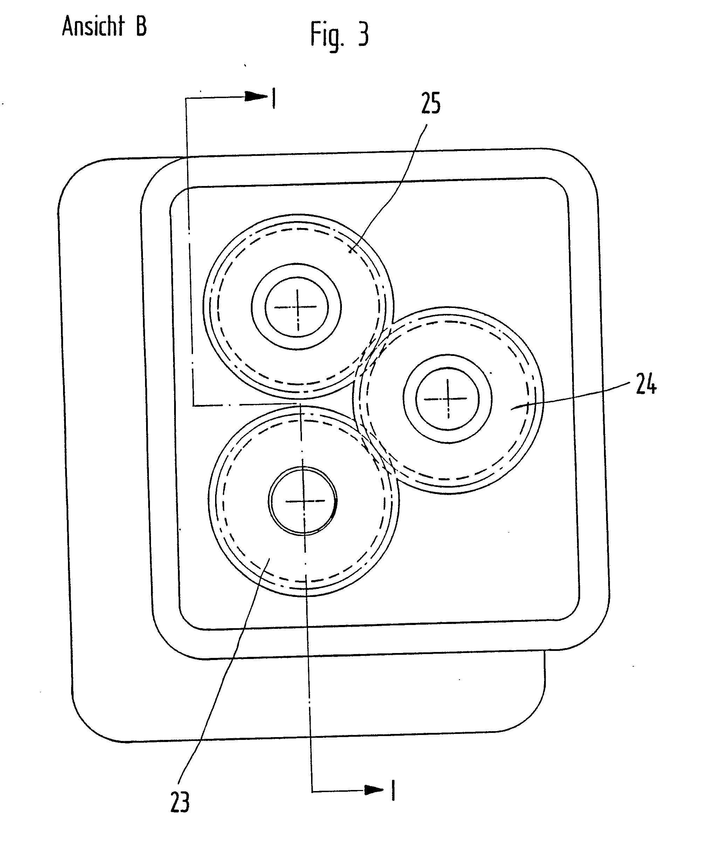

Das Motorgehäuse 4 trägt koaxial liegend, die mit ihm festverbundene Motorgehäusewelle 22. Diese ist genauso wie die Motorwelle und die Abtriebswelle ebenfalls kugelgelagert und zwar im Getriebegehäuse 1. Zahnräder 23, 24 und 25 kämmen ineinander wobei das Zwischenrad 24 lediglich in Figur 3 ersichtlich ist, die die Ansicht B der Fig. 1 zeigt. Die Ausgangswelle 26 sitzt auf dem Zahnrad 25. Sie ist ebenfalls kugelgelagert und trägt den Anschlußflansch 27.

Die Wirkungsweise der Vorrichtung ist folgende:

Das in den Einlauf 2 einströmende Öl oder dgl. gelangt durch den Ringkanal 6, den weiteren Kanal 7 und den Seitenkanal 8, sowie die Ventilplatte 10 in die Zylinder und bewirkt eine Kraft auf die Kolben 9. Da die Kolben 9 über Gleitblöcke 90 und die Gleitscheibe 13 auf der Schräge oder Rampe des Motorgehäuses 4 abgestützt sind, bewirkt die Kraft auf die Kolben 9, wenn sie groß genug ist, eine Drehbewegung relativ zwischen dem Zylinderblock 16 und der Motorwelle 15 einerseits und dem Motorgehäuse 4 sowie der Abschlußplatte 5 und der Motorgehäusewelle 22 andererseits.

Das Hydraulikmittel wird von den Axialkolben 9 durch die Öffnungen 12 in der Ventilplatte 10 und die Öffnung 14 im Motorgehäuse 4 und den Auslauf 3 wieder aus dem Getriebegehäuse 1 herausbefördert.

Eine Drehung der Motorwelle 15 wird durch die Zahnräder 19, 20 auf die Abtriebswelle 17 und somit auf den Abschlußflansch 18 übertragen, wobei die Drehrichtung umgekehrt wird.

Eine Drehung der Motorgehäusewelle 22 wird durch das Zahnrad 23, das Zwischenrad 24 und das Zahnrad 25 auf die Abtriebswelle 26 und somit auf den Abschlußflansch 27 übertragen, wobei die Drehrichtung zweimal umgekehrt wird.

Somit bewirkt das in den Einlauf 2 hineingepumpte Öl, eine Drehung der Motorwelle 15 und/oder der Motorgehäusewelle 22 wobei die Drehrichtungen entgegengesetzt sind. Diese Drehung ist beliebig auf die Abtriebswelle 17, 26 und die Anschlußflansche 18, 27 zu verteilen, wobei die Zahnräder 19,20 und 23, 25 in Verbindung mit dem Zwischenrad 24 bewirken, daß Drehrichtungen an den Abtriebswellen 17 und 26 und den Anschlußflanschen 18 und 27 gleich sind. Somit kann das erfindungsgemäße Ausgleichsgetriebe den bisher getriebenen Auf wand z.B. angetriebenen Rädern jeweils einen Hydraulikmotor mit den entsprechenden Untersetzungsgetriebe zuzuordnen erheblich verringern.

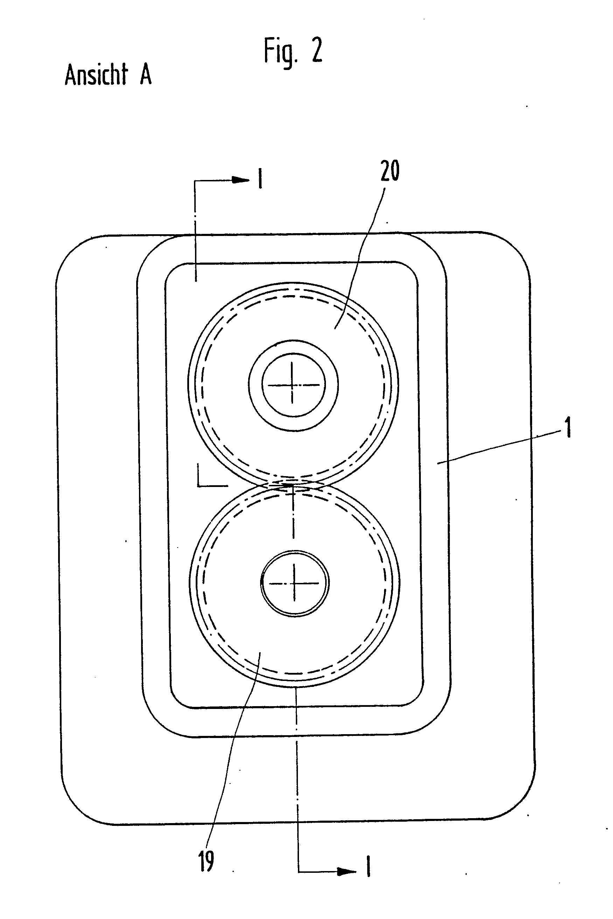

Die Schnittführung der Fig. 1 ist in Fig. 2 eingezeichnet. In Fig. 2 ist eine Ansicht in Pfeilrichtung A dargestellt, mit der Schnittangabe I - I. Das Getriebegehäuse 1 ist geöffnet und man sieht auf die Zahnräder 19 und 20. Auch in Fig. 3 ist die Schnittführung der Fig. 1 gezeigt. Auch hier ist das Getriebegehäuse 1 geöffnet und man sieht die Zahnräder 23 und 25 mit dem Zwischenrad 24.

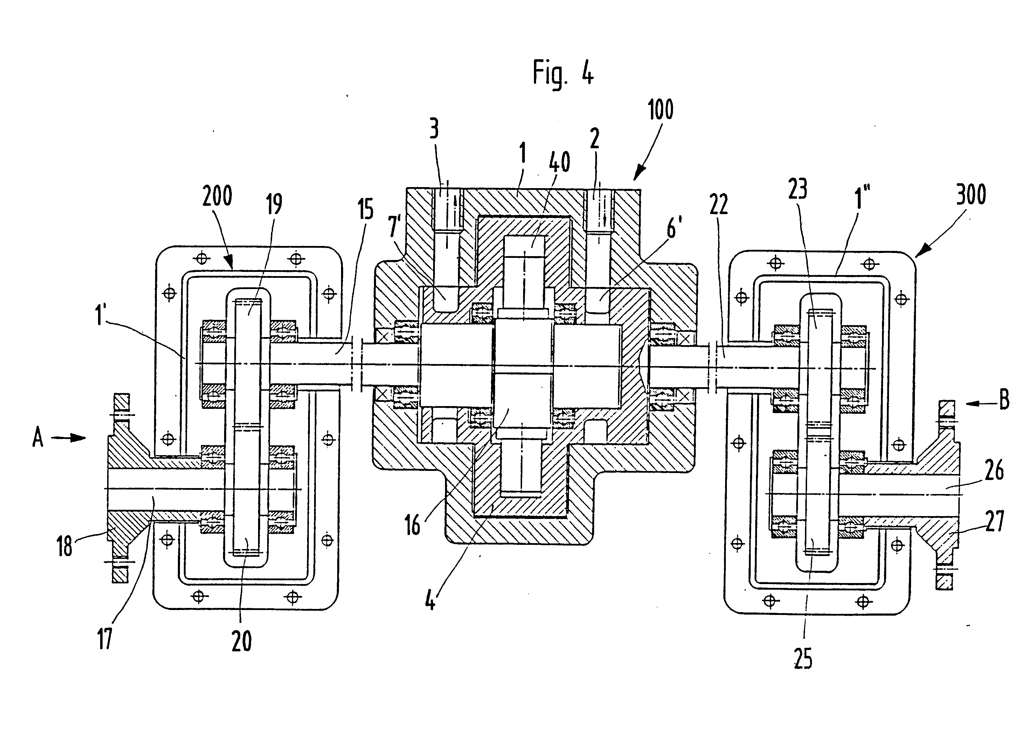

In Figur 4 ist ein weiteres Ausführungsbeispiel der Erfindung dargestellt. Gleiche Bezugszeichen bedeuten gleiche Teile. Bei diesem Ausführungsbeispiel ist das Getriebegehäuse 1 geteilt ausgebildet und zwar das Gehäuse des hydrostatischen Motors 100 ist mit 1 bezeichnet, das Gehäuse des ersten Getriebes 200 ist mit 1′ und das Gehäuse des zweiten Getriebes 300 ist mit 1″ bezeichnet.

Das erste Getriebe 200 weist wieder einen Anschlußflansch 18 auf, dem ein Zahnrad 20 nachgeordnet ist und ein weiteres Zahnrad 19, das die Motorwelle 15 trägt.

Auf der gegenüberliegenden Seite im Bereich des zweiten Getriebes 200 ist wieder ein Anschlußflansch 27 dargestellt mit zugehörigem Zahnrad 25 und dem mit der Motorgehäusewelle 22 verbundenen Zahnrad 23, wobei auch hier ein Zwischenrad 24 angeordnet ist, was nicht sichtbar ist. Sämtliche drehbeweglichen Teile sind in Kugellagern oder dgl. gelagert.

Die Motorwelle 15 arbeitet hier mit einem Radialkolbenmotor zusammen, wobei das Getriebegehäuse 1 wieder eine Einlauföffnung 2 und eine Auslauföffnung 3 hat und im Inneren ein entsprechend geformtes Motorgehäuse 4 aufnimmt, das mit der Motorgehäusewelle 22 fest verbunden ist. Die Welle 15 ist ihrerseits mit dem Zylinderblock 16 verbunden, der bei Axialkolbenanordnungen selbstverständlich eine andere Form hat als bei den Radialkolbenanordnungen der Fig. 4. Das Grundprinzip ist aber das gleiche wie in Zusammenhang mit Fig. 1 beschrieben. Der Hydraulikfluß erfolgt in an sich bekannter Weise wieder über entsprechende Kanäle 6′ und 7′. Da Axialkolbeneinheiten vorbekannt sind braucht dies nicht näher beschrieben zu werden. Die Axialkolben werden bewegt durch die innere Nockenscheibe 40 des Motorgehäuses 4. Motorgehäuse 4 und Nockenscheibe 40 bilden eine Einheit.

Die Wirkungsweise der Vorrichtung ist die gleiche, wie die Wirkungsweise der Vorrichtung nach Fig. 1.

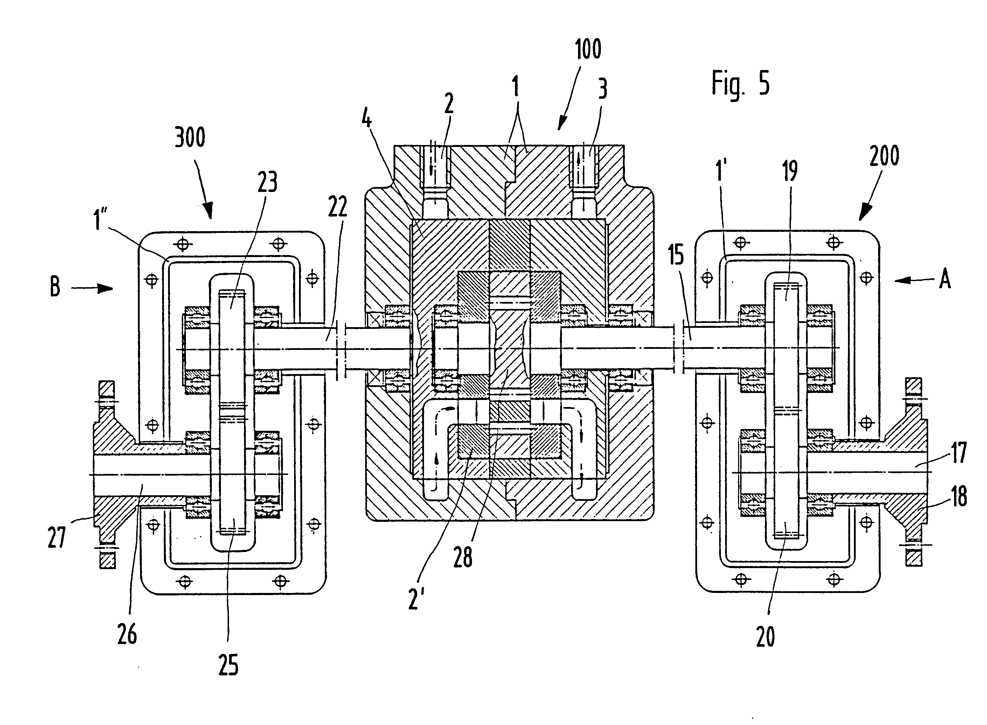

In Figur 5 ist ein Ausführungsbeispiel gezeigt mit einer Zahnradpumpe als hydrostatischen Motor 100.

Gleiche Bezugzeichen bedeuten wieder gleiche Teile.

Bei dieser Vorrichtung wird in dem hydrostatischen Motor 100 der Ölfluß umgekehrt gelegt als in den vorherigen Beispielen. Im Inneren liegt statt der Kolbenmotoren, ein Zahnradmotor. Dieser Zahnradmotor kann beliebig ausgebildet sein. Wesentlich ist dabei wieder, daß das Motorgehäuse 4 mit der Motorgehäusewelle 22 fest verbunden ist und das die Motorwelle 15 fest mit dem Förderzahnrad 28 verbunden ist. Im Verhältnis zu Figur 4 und auch zu Figur 1 liegt die Gesamtvorrichtung spiegelbildlich. Die Seiten A und B sind somit gedreht dargestellt.

Bei dem Beispiel der Fig. 5 im Verhältnis zu den Beispielen der Fig. 1 und 4, werden die Zylinderblöcke 16 durch einen Rotor 2$'$ ersetzt, aber die Wirkungsweise der Zahnradpumpe ist ähnlich wie die Wirkungsweise mit den Kolbenmotoren, wobei lediglich die Hydraulikmittelführung etwas anders laufen muß als bei den als Beispiele aufge führten hydrostatischen Kolbenmotoren.

Sämtliche Ausführungsbeispiele beziehen sich auf den Einsatz von gelenkten oder maschinengeführten Fahrzeugen oder dgl. wie das gesamte Konzept. Beide Getriebe 200 und 300 haben bei gleichen Durchmessern der angetriebenen Rädern das gleiche Übersetzungsverhältnis. Bei Antriebsrädern mit unterschiedlichen Durchmessern sollten die Übersetzungsverhältnisse der beiden Getriebe 200 und 300 im umgekehrten Verhältnis zum Durchmesserverhältnis der Antriebsräder stehen.

Die Getriebe 200 und 300 brauchen nicht direkt am Getriebegehäuse 1 angebracht zu sein. Sie können z.B. auch gesondert in die Naben der anzutreibenden Räder eingebaut werden.

Wie aus den Beispielen ersichtlich ist, läßt sich der Gedanke vielfach variieren, wesentlich ist, daß ein hydrostatischer Motor 100 Verwendung findet, dem zwei Getriebe zugeordnet sind, wobei bei den Beispielen die Wirkungsweise zumindest ähnlich oder gleich ist. Die Kompaktausführung der Figur 1 ist selbstverständlich vorteilhafter.

Die geoffenbarten Merkmale einzeln und in Kombination werden soweit sie gegenüber dem Stand der Technik neu sind als erfindungswesentlich angesehen.

**Ansprüche**

1. Ausgleichsgetriebe bzw. Differentialgetriebe, insbesondere für gelenkte angetriebene Fahrzeuge oder dgl. bestehend aus:
-einem hydrostatischen Motor (100), dem beidseitig mechanische Getriebe (200,300) zugeordnet sind,
- wobei die mit dem Rotor (2$'$) bzw. dem Zylinderblock (16) des hydrostatischen Motors (100) verbundene Motorwelle (15) mit einem der mechanischen Getriebe (200)
-und die mit dem drehbar gelagerten Motorgehäuse (4) verbundene Motorgehäusewelle (22) des hydrostatischen Motors mit dem zweiten mechanischen Getriebe (300) verbunden ist
- und das Motorgehäuse (4) mit innenliegendem Rotor (2$'$) bzw. Zylinderblock (16) von einem die Ein- und Ausläufe (2,3) des hydraulischen Mittels aufweisenden Getriebegehäuse (1) umgriffen ist.

2. Ausgleichsgetriebe nach Anspruch 1, dadurch gekennzeichnet, daß der hydrostatische Motor (100) als Axialkolbenmotor ausgebildet ist.

3. Ausgleichsgetriebe nach Anspruch 1, dadurch gekennzeichnet, daß der hydrostatische Motor (100) als Radialkolbenmotor ausgebildet ist.

4. Ausgleichsgetriebe nach Anspruch 1, dadurch gekennzeichnet, daß der hydrostatische Motor (100) als Zahnradmotor ausgebildet ist.

5. Ausgleichsgetriebe nach einem oder mehreren der Ansprüche 1 - 4 dadurch gekennzeichnet, daß alle diese Teile, wie hydraulischer Motor (100), und die mechanischen Getriebe (200,300) von einem gemeinsamen Getriebegegehäuse (1) umgriffen sind.

6. Ausgleichsgetriebe nach einem oder mehreren der Ansprüche 1 - 4 dadurch gekennzeichnet daß die mechanischen Getriebe (200,300) von separaten Getriebegehäusen (1$'$ 1$''$) umgriffen sind.

Fig. 1

Klemm

# Fig. 2

Ansicht A

20

I

1

19

I

Klemm

Ansicht B

Fig. 3

25

24

23

Klemm

Fig. 4

Fig. 5

Klemm

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 258 281 (HURTH)<br>* Seite 7, Zeile 23 - Seite 14, Zeile 11; Figuren 2,5,7 *<br>--- | 1-6 | B 60 K 17/10 |
| A | FR-A-2 143 630 (VEB)<br>* Seite 2, Zeilen 4-22; Figur *<br>--- | 1,6 | |
| A | US-A-1 887 229 (BUTTON)<br>* Seite 1, Zeile 58 - Seite 2, Zeile 35; Figuren 1,2 *<br>----- | 1,3 | |

RECHERCHIERTE SACHGEBIETE (Int. Cl.4)

B 60 K

Der vorliegende Recherchenbericht wurde für alle Patentansprüche erstellt

| Recherchenort | Abschlußdatum der Recherche | Prüfer |
|---|---|---|
| DEN HAAG | 08-08-1989 | FLODSTROEM J.B. |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
 Dokument

EPO FORM 1503 03.82 (P0403)